(19) Europäisches Patentamt
European Patent Office
Office européen des brevets

(11) Veröffentlichungsnummer: **0 029 515**
**B1**

# (12) EUROPÄISCHE PATENTSCHRIFT

(45) Veröffentlichungstag der Patentschrift: **22.12.82**

(51) Int. Cl.³: **C 07 C 69/74,** A 01 N 53/00

(21) Anmeldenummer: **80106611.9**

(22) Anmeldetag: **29.10.80**

(54) **Fluor-substituierte 2,2,3,3-Tetramethyl-cyclopropan-1-carbonsäure-benzylester, Verfahren zu ihrer Herstellung und ihre Verwendung in Schädlingsbekämpfungsmitteln.**

(30) Priorität: **08.11.79 DE 2945038**

(43) Veröffentlichungstag der Anmeldung: **03.06.81 Patentblatt 81/22**

(45) Bekanntmachung des Hinweises auf die Patenterteilung: **22.12.82 Patentblatt 82/51**

(84) Benannte Vertragsstaaten: **AT BE CH DE FR GB IT LI NL SE**

(56) Entgegenhaltungen:
**DE-A-2 231 312**
**DE-A-2 732 811**
**DE-A-2 804 284**
**GB-A-2 025 770**
**US-A-4 162 366**

**Chemical Abstracts Band 81, Nr. 23, 1974 Columbus, Ohio, USA, K. SOTA et al. "New insecticidal cyclopropanecarboxylic esters. V. 4-Aryl-2-buten-1-yl chrysanthemates and related esters. II." Seiten 490, Spalte 2 und 491, Spalte 1, Abstract Nr. 151750t in Verbindung mit Chemical Substance Index Band 81, 1974, Seite 1420CS, Spalte 1, Zeilen 6 bis 14**

(73) Patentinhaber: **BAYER AG, Zentralbereich Patente, Marken und Lizenzen, D-5090 Leverkusen 1, Bayerwerk (DE)**

(72) Erfinder: **Fuchs, Rainer, Dr., Roeberstrasse 8, D-5600 Wuppertal 1 (DE)**
Erfinder: **Naumann, Klaus, Dr., Richard-Wagner-Strasse 9, D-5090 Leverkusen 1 (DE)**
Erfinder: **Riebel, Hans-Jochem, Dr., In der Beek 92, D-5600 Wuppertal 1 (DE)**
Erfinder: **Behrenz, Wolfgang, Dr., Untergründemich 14, D-5063 Overath (DE)**
Erfinder: **Hammann, Ingeborg, Dr., Belfortstrasse 9, D-5000 Köln 1 (DE)**
Erfinder: **Stendel, Wilhelm, Dr., In den Birken 55, D-5600 Wuppertal 1 (DE)**

(56) Entgegenhaltungen:

**Chemical Abstracts Band 92, Nr. 25, 23. Juni 1980 Columbus, Ohio, USA, M. A. SALEH et al. "alpha-Cyano-3-phenoxy-benzyl pyrethroids: derivatizations at the benzylic position" Seite 585, Spalte 2, Abstract Nr. 215024w in Verbindung mit Chemical Substance Index Band 92, 1980, Seite 1895CS, Spalte 3, Zeilen 49 bis 52**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Fluor-substituierte 2,2,3,3-Tetramethyl-cyclopropan-1-carbonsäure-benzylester, Verfahren zu ihrer Herstellung und ihre Verwendung in Schädlingsbekämpfungsmitteln

Die Erfindung betrifft neue fluor-substituierte 2,2,3,3-Tetramethyl-cyclopropan-1-carbonsäure-benzylester, ein Verfahren zu ihrer Herstellung und ihre Verwendung in Schädlingsbekämpfungsmitteln, insbesondere in Insektiziden und Akariziden.

Es ist bekannt, dass bestimmte Cyclopropancarbonsäureester, wie z.B. 3-(2-Methyl-prop-1-en-1-yl)-2,2-dimethyl-cyclopropan-1-carbonsäure-(3-phenoxy-benzyl)-ester, 3-(2,2-Dichlor-vinyl)-2,2-dimethyl-cyclopropan-1-carbonsäure-(3-phenoxy-benzyl)-ester, 2,2,3,3-Tetramethyl-cyclopropan-1-carbonsäure-(3-phenoxy-benzyl)-ester und 2,2,3,3-Tetramethyl-cyclopropan-1-carbonsäure-(3-phenoxy-α-cyano-benzyl)-ester, insektizid wirksam sind (vergleiche GB-PS 1 243 858 und 1 413 491 sowie US-PS 3 835 176 und DE-A 2 231 312). Die Wirkung dieser Verbindungen ist jedoch, insbesondere bei niedrigen Wirkstoffkonzentrationen und Aufwandmengen, nicht immer zufriedenstellend.

Es wurden nun neue fluor-substituierte 2,2,3,3-Tetramethyl-cyclopropan-1-carbonsäure-benzylester der Formel I

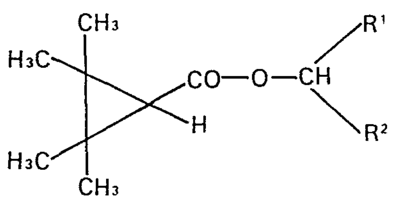

(I)

gefunden, in welcher

$R^1$ für Wasserstoff, Cyano, Alkyl, Alkenyl oder Alkinyl, letztere mit jeweils bis zu 4 Kohlenstoffatomen steht, und

$R^2$ für einen durch Halogen und/oder gegebenenfalls halogen-substituiertes Phenoxy substituierten Phenyl-Rest steht mit der Massgabe, dass der Rest $R^2$ insgesamt wenigstens einen Fluor-Substituenten enthält.

Man erhält die neuen Verbindungen der Formel (I), wenn man 2,2,3,3-Tetramethyl-cyclopropan-1-carbonsäure der Formel II

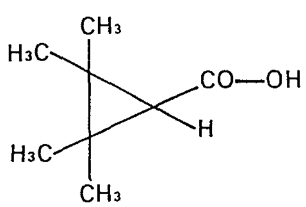

(II)

oder reaktionsfähige Derivate derselben mit Alkoholen der Formel III

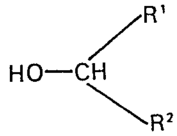

(III)

in welcher

$R^1$ und $R^2$ die oben angegebenen Bedeutungen haben,

oder mit reaktionsfähigen Derivaten derselben, gegebenenfalls in Gegenwart von Säureakzeptoren und/oder Katalysatoren und gegebenenfalls unter Verwendung von Verdünnungsmitteln umsetzt.

Die neuen fluor-substituierten 2,2,3,3-Tetramethyl-cyclopropan-1-carbonsäure-benzylester der Formel (I) zeichnen sich durch hohe insektizide und akarizide Wirksamkeit aus.

Überraschenderweise zeigen die erfindungsgemässen Verbindungen der Formel (I) eine erheblich höhere insektizide und akarizide Wirkung als aus dem Stand der Technik bekannte Verbindungen analoger Konstitution und gleicher Wirkungsrichtung.

Die allgemeine Formel (I) schliesst die verschiedenen möglichen optisch aktiven Isomeren sowie deren Mischungen mit ein.

Gegenstand der Erfindung sind vorzugsweise Verbindungen der Formel (I), in welcher

$R^1$ für Wasserstoff oder Cyano steht und

$R^2$ für Pentfluorphenyl, 4-Fluor-3-phenoxy-phenyl, 3-(4-Fluor-phenoxy)-phenyl oder 4-Fluor-3-(4-fluor-phenoxy)-phenyl steht.

In einer bevorzugten Variante (a) des Herstellungsverfahrens für die Verbindungen der Formel (I) wird 2,2,3,3-Tetramethyl-cyclopropan-1-carbonsäurechlorid der Formel II a

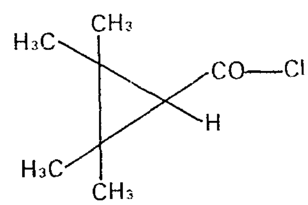

(II a)

mit Benzylalkoholen der Formel III (oben) in Gegenwart von Säureakzeptoren und unter Verwendung von Verdünnungsmitteln umgesetzt.

In einer weiteren bevorzugten Verfahrensvariante (b), insbesondere zur Herstellung von Verbindungen der Formel (I), in welcher $R^1$ für Cyano und $R^2$ für fluor-substituiertes Phenoxy-phenyl steht, wird das Säurechlorid der Formel II a (oben) mit entsprechenden Phenoxy-benzaldehyden der Formel IV

$OHC-R^2$ (IV)

in welcher

$R^2$ für fluor-substituiertes Phenoxy-phenyl steht, und wenigstens der äquimolaren Menge eines Alkalicyanids (Natrium- oder Kalium-cyanid) in Gegenwart von Wasser und eines mit Wasser nicht mischbaren organischen Lösungsmittels

und gegebenenfalls in Gegenwart von Wasser und eines mit Wasser nicht mischbaren organischen Lösungsmittels und gegebenenfalls in Gegenwart eines Katalysators umgesetzt.

Als weitere reaktionsfähige Derivate der Carbonsäure der Formel (II) sind deren Niederalkylester zu nennen, welche mit Alkoholen der Formel (III) nach üblichen Methoden umgesetzt werden können.

Alkali-, Erdalkali- oder Ammoniumsalze der Carbonsäure (II) können mit Benzylhalogeniden, welche sich von den Benzylalkoholen der Formel (III) ableiten, ebenfalls zu Verbindungen der Formel (I) umgesetzt werden.

Verwendet man als Ausgangsstoffe bei der Verfahrensvariante (a) beispielsweise Pentafluorbenzylalkohol und bei Variante (b) 4-Fluor-3-(4-fluor-phenoxy)-benzaldehyd, so können die Reaktionen bei den beiden Verfahrensvarianten durch folgende Formelschemata skizziert werden:

(a)

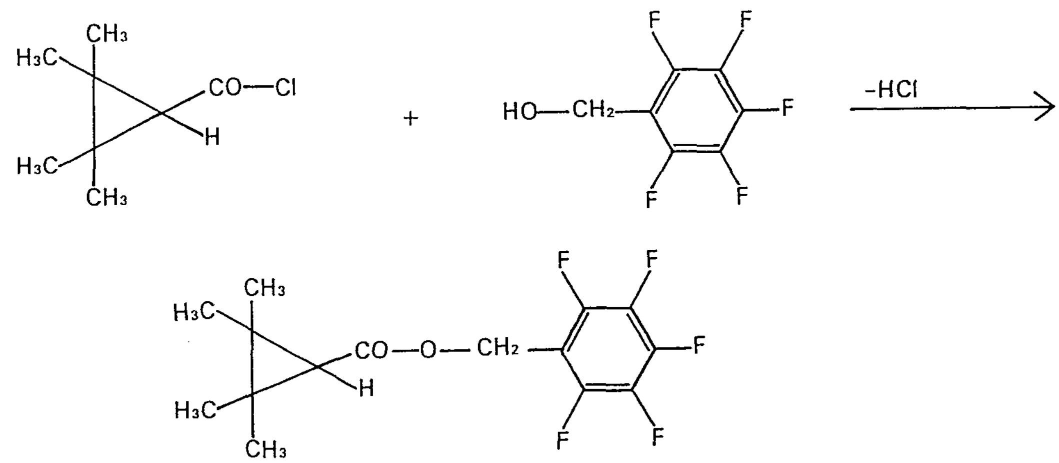


(b)

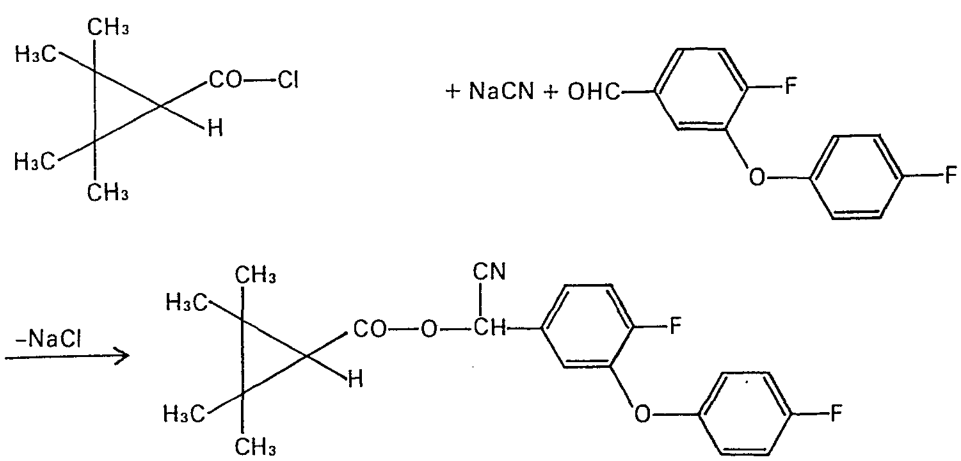


Die als Ausgangsverbindung zu verwendende 2,2,3,3-Tetramethyl-cyclopropan-1-carbonsäure ist bereits bekannt (vergleiche US-PS 3835176).

Das Säurechlorid der Formel (II a) erhält man daraus auf übliche Weise, beispielsweise durch Umsetzung mit Thionylchlorid, gegebenenfalls in Gegenwart eines Verdünnungsmittels, wie z.B. Tetrachlorkohlenstoff, bei Temperaturen zwischen 10 und 100°C.

Die weiter als Ausgangsstoffe zu verwendenden Benzylalkohole sind durch Formel (III) definiert. Vorzugsweise stehen darin $R^1$ und $R^2$ für diejenigen Reste, welche bereits bei der Definition der Reste $R^1$ und $R^2$ in Formel (I) als bevorzugt genannt wurden.

Als Beispiele für die Ausgangsverbindungen der Formel (III) seien genannt:

Pentafluorbenzylalkohol, 4-Fluor-3-phenoxy-benzylalkohol, 3-(4-Fluor-phenoxy)-benzylalkohol, 4-Fluor-3-(4-fluor-phenoxy)-benzylalkohol und 3-(4-Fluor-phenoxy)-α-cyano-benzylalkohol.

Die Ausgangsverbindungen der Formel (III) sind bereits bekannt (vergleiche GB-PS 1078511, DE-OS' 2621433, 2709264 und 2739854).

Die als Ausgangsstoffe verwendbaren Phenoxy-benzaldehyde sind durch Formel (IV) definiert. Vorzugsweise steht darin $R^2$ für diejenigen Reste, welche bereits bei der Definition von $R^2$ in Formel (I) als bevorzugt genannt wurden. Als Beispiele seien genannt:

4-Fluor-3-phenoxy-benzaldehyd, 3-(4-Fluorphenoxy)-benzaldehyd und 4-Fluor-3-(4-fluorphenoxy)-benzaldehyd.

Die Phenoxybenzaldehyde der Formel (IV) sind bereits bekannt (vergleiche DE-OS' 2621433, 2709264 und 2739854).

Das Verfahren zur Herstellung der neuen Verbindungen der Formel (I) wird in allen Varianten vorzugsweise unter Verwendung von Verdünnungsmitteln durchgeführt. Als Verdünnungsmittel kommen praktisch alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether, wie Diethyl- und Dibutylether, Glycoldimethylether und Diglycoldimethylether, Tetrahydrofuran und Dioxan, Ketone, wie Aceton, Methyl-ethyl-, Methyl-isopropyl- und Methyl-isobutyl-keton, Ester, wie Essigsäure-methylester und -ethylester, Nitrile, wie z.B. Acetonitril und Propionitril, Amide, wie z.B. Dimethylformamid, Dimethylacetamid und N-Methylpyrrolidon, sowie Dimethylsulfoxid, Tetramethylensulfon und Hexamethylphosphorsäuretriamid.

Die Variante (a) des erfindungsgemässen Verfahrens wird vorzugsweise in Gegenwart von Säureakzeptoren durchgeführt. Als Säureakzeptoren können die üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triäthylamin, Trimethylamin, Dimethylanilin, Dimethylbenzylamin, Pyridin, Diazabicyclooctan, Diazabicyclononan und Diazabicycloundecen.

Die Variante (b) des erfindungsgemässen Verfahrens wird in Gegenwart von Wasser und eines der oben genannten organischen Lösungsmittel, soweit mit Wasser nicht mischbar, durchgeführt. Hierfür sind insbesondere die oben genannten Kohlenwasserstoffe geeignet.

Als Katalysatoren werden bei der Verfahrensvariante (b) vorzugsweise Verbindungen verwendet, welche zum Transfer von Anionen aus Wasser in organische Lösungsmittel geeignet sind. Beispiele hierfür sind Benzyl-triethylammoniumhydrogensulfat, Tetrabutylammonium-bromid und Methyl-trioctyl-ammonium-chlorid (Aliquat 336).

In allen Verfahrensvarianten kann die Reaktionstemperatur innerhalb eines grösseren Bereichs variiert werden. Im allgemeinen arbeitet man zwischen 0 und 100°C, vorzugsweise bei 10 bis 50°C.

Das erfindungsgemässe Verfahren wird im allgemeinen bei Normaldruck durchgeführt. Zur Durchführung des erfindungsgemässen Verfahrens werden die Ausgangsstoffe gewöhnlich in äquimolaren Mengen eingesetzt. Ein Überschuss der einen oder anderen Reaktionskomponente bringt keine wesentlichen Vorteile. Die Ausgangsstoffe werden in geeigneten Verdünnungsmitteln zusammen gegeben und, gegebenenfalls nach Zugabe eines Säureakzeptors und/oder eines Katalysators, bis zum Reaktionsende gerührt.

Die Aufarbeitung kann nach üblichen Methoden durchgeführt werden, beispielsweise indem man das Reaktionsgemisch gegebenenfalls mit Wasser und/oder einem mit Wasser nicht mischbaren organischen Lösungsmittel, wie z.B. Toluol, verdünnt, die organische Phase abtrennt, mit Wasser wäscht, trocknet, filtriert und vom Filtrat das Lösungsmittel unter vermindertem Druck und bei mässig erhöhter Temperatur sorgfältig abdestilliert («andestilliert»).

Die Wirkstoffe eignen sich bei guter Pflanzenverträglichkeit und günstiger Warmblütertoxizität zur Bekämpfung von tierischen Schädlingen, insbesondere Insekten, Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Procellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa sp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercionthrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus sp., Phorodon humuli, Rhopalosiphum padi, Empoasca spp., Euscelis bilobatus, Nephotettix cincticeps, Lecanium corni,

Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp. Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus , Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyoma spp., Hyalomma spp., Ixodes spp., Psoroptes spp., Chorioptes spp., Sarcoptes spp., Tarsonemus spp., Bryobia praetiosa, Panonychus spp., Tetranychus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnusschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen

zwischen 0,1 und 95 Gewichtsprozent Wirkstoff, vorzugsweise zwischen 0,5 und 90%.

Die Anwendung der erfindungsgemässen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 1 Gew.-% liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemässen Wirkstoffe eignen sich auch zur Bekämpfung von Ekto- und Endoparasiten auf dem veterinärmedizinischen Gebiet.

Die Anwendung der erfindungsgemässen Wirkstoffe geschieht im Veterinärsektor in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgiessens (pour-on and spot-on) und des Einpuderns sowie durch parenterale Anwendung in Form beispielsweise der Injektion.

## HERSTELLUNGSBEISPIELE

Beispiel 1:

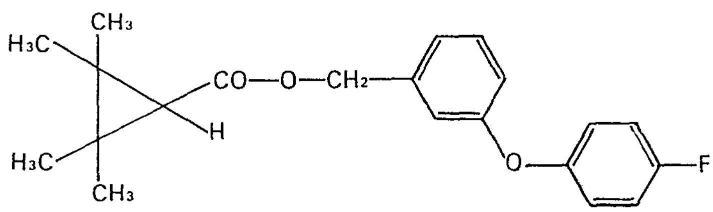

5,05 g (0,0232 Mol) 3-(4-Fluor-phenoxy)-benzylalkohol und 3,72 g (0,0232 Mol) 2,2,3,3-Tetramethylcyclopropancarbonsäurechlorid werden in 100 ml wasserfreiem Toluol gelöst und bei 20–25°C 2,3 g Pyridin, gelöst in 50 ml wasserfreiem Toluol, unter Rühren zugetropft. Anschliessend wird weitere 3 Stunden bei 25°C gerührt. Das Reaktionsgemisch wird in 150 ml Wasser, dem 10 ml konz. Salzsäure zugesetzt werden, gegossen, die organische Phase abgetrennt und nochmals mit 100 ml Wasser gewaschen. Anschliessend wird die Toluolphase über Natriumsulfat getrocknet und das Lösungsmittel im Wasserstrahlvakuum abdestilliert. Letztere Lösungsmittelreste werden durch kurzes Andestillieren bei 60°C/1 Torr Badtemperatur entfernt. Man erhält 6,5 g (81,9% der Theorie) 2,2,3,3-Tetramethyl-cyclopropancarbonsäure-3-(4-fluorphenoxy)-benzylester als gelbes Öl mit dem Brechungsindex $n_D^{20}$ : 1,5348.

Analog erhält man:

Beispiel 2:

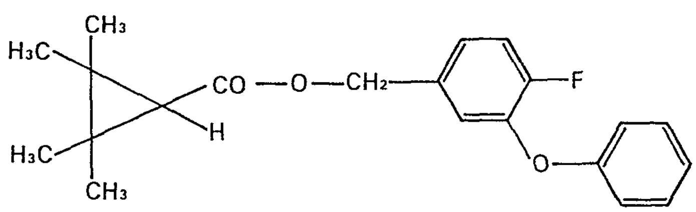

Brechungsindex $n_D^{24}$ : 1,5340

Beispiel 3:

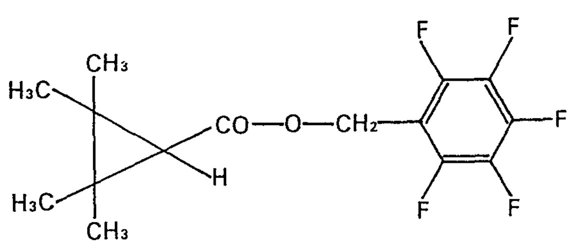

0,1 Mol Tetramethylcyclopropancarbonsäurechlorid und 0,1 Mol Pentafluorbenzylalkohol werden ohne Solvens langsam auf 100°C bis zum Ende der Gasentwicklung erhitzt. Dann wird am Kugelrohr destilliert. Ausbeute 95% $Kp_2$ 150°C.

Beispiel 4:

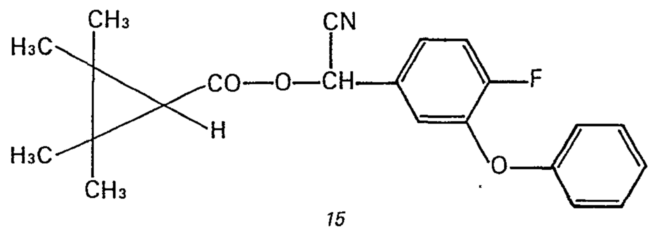

5 g (0,0232 Mol) 3-Phenoxy-4-fluor-benzaldehyd und 3,72 g (0,0232 Mol) 2,2,3,3-Tetramethylcyclopropancarbonsäurechlorid werden zusammen unter Rühren bei 20–25°C zu einer Mischung von 1,8 g Natriumcyanid, 2,7 ml Wasser, 100 ml n-Hexan und 0,6 g Tetrabutylammoniumbromid getropft und dann 4 Stunden bei 20–25°C gerührt. Anschliessend wird die Rekationsmischung mit 300 ml Toluol versetzt und 2mal mit je 300 ml Wasser ausgeschüttelt. Die organische Phase wird abgetrennt, über Magnesiumsulfat getrocknet und das Lösungsmittel im Wasserstrahlvakuum abdestilliert. Letzte Lösungsmittelreste werden durch kurzes Andestillieren bei 60°C/1 Torr Badtemperatur entfernt. Man erhält 6,7 g (78,7% der Theorie) 2,2,3,3-Tetramethylcyclopropancarbonsäure-α-cyano-3-phenoxy-4-fluor-benzylester als gelbes Öl mit dem Brechungsindex $n_D^{24}$:1,5732.

Analog erhält man:

Beispiel 5:

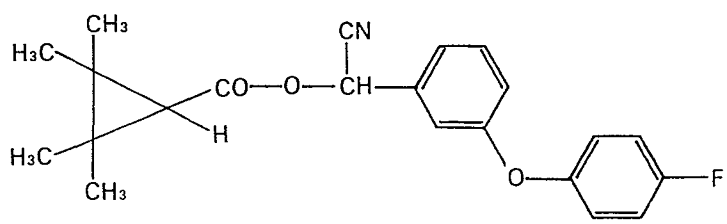

Brechungsindex $n_D^{20}$: 1,5480

Beispiel A
$LT_{100}$-Test für Dipteren

Testtiere: Aedes aegypti
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschliessend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100%igen knock down-Effekt notwendig ist.

Bei diesem Test zeigen z.B. die folgenden Verbindungen der Herstellungsbeispiele überlegene Wirkung gegenüber dem Stand der Technik: 2, 4

Beispiel B
$LD_{100}$-Test

Testtiere: Blatta orientalis
Zahl der Testiere: 10
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der

Wirkstofflösung ist die Menge Wirkstoff pro $m^2$ Filterpapier verschieden hoch. Anschliessend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100%, dass alle Testtiere abgetötet wurden; 0% bedeutet, dass keine Testtiere abgetötet wurden.

Bei diesem Test zeigen z.B. die folgenden Verbindungen der Herstellungsbeispiele überlegene Wirkung gegenüber dem Stand der Technik: 2, 4

Beispiel C
Laphygma-Test

Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Laphygma frugiperda) besetzt, solange die Blätter noch feucht sind.

Nach der gewünschten Zeit wird die Abtötung in % bestimmt. Dabei bedeutet 100%, dass alle Raupen abgetötet wurden; 0% bedeutet, dass keine Raupen abgetötet wurden.

Bei diesem Test zeigen z.B. die folgenden Verbindungen der Herstellungsbeispiele überlegene Wirksamkeit gegenüber dem Stand der Technik: 4

Beispiel D
Tetranychus-Test (resistent)
Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100%, dass alle Spinnmilben abgetötet wurden; 0% bedeutet, dass keine Spinnmilben abgetötet wurden.

Bei diesem Test zeigen z.B. die folgenden Verbindungen der Herstellungsbeispiele überlegene Wirksamkeit gegenüber dem Stand der Technik: 2, 4

Beispiel E
Test mit Boophilus microplus resistent
Lösungsmittel: 35 Gewichtsteile Äthylenglykolmonomethyläther
35 Gewichtsteile Nonylphenolypolyglykoläther

Zur Herstellung einer zweckmässigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

10 adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

Bei diesem Test zeigen z.B. die folgenden Verbindungen der Herstellungsbeispiele überlegene Wirkung gegenüber dem Stand der Technik: 2, 4

Beispiel F
Test mit Lucilia cuprina res.-Larven

Emulgator: 35 Gewichtsteile Äthylenglykolmonomethyläther
35 Gewichtsteile Nonylphenolpolyglykoläther

Zur Herstellung einer zweckmässigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^2$ Pferdefleisch und 0,5 ml der Wirkstoffzubereitung enthält. Nach 24 Stunden wird der Abtötungsgrad bestimmt.

Bei diesem Test zeigen z.B. die folgenden Verbindungen der Herstellungsbeispiele überlegene Wirkung gegenüber dem Stand der Technik: 2, 4

Beispiel G
Phaedon-Larven-Test

Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100%, dass alle Käfer-Larven abgetötet wurden; 0% bedeutet, dass keine Käfer-Larven abgetötet wurden.

Bei diesem Test zeigen z.B. die folgenden Verbindugnen der Herstellungsbeispiele überlegene Wirksamkeit gegenüber dem Stand der Technik: 2.

Beispiel H
Myzus-Test

Lösungsmittel: 3 Gewichtsteile Aceton
Emulgator: 1 Gewichtsteile Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100%, dass alle Blattläuse abgetötet wurden; 0% bedeutet, dass keine Blattläuse abgetötet wurden.

Bei diesem Test zeigen z.B. die folgenden Verbindungen der Herstellungsbeispiele überlegene Wirksamkeit gegenüber dem Stand der Technik: 4.

**Patentansprüche**

1. Fluor-substituierte 2,2,3,3-Tetramethyl-cyclopropan-1-carbonsäure-benzylester der Formel I

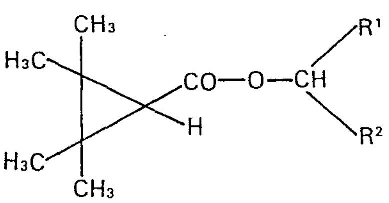

(I)

in welcher

$R^1$ für Wasserstoff, Cyano, Alkyl, Alkenyl oder Alkinyl, letztere mit jeweils bis zu 4 Kohlenstoffatomen steht, und

$R^2$ für einen durch Halogen und/oder gegebenenfalls halogen-substituiertes Phenoxy substituierten Phenyl-Rest steht mit der Massgabe, dass der Rest $R^2$ insgesamt wenigstens einen Fluor-Substituenten enthält.

2. Verfahren zur Herstellung von Fluor-substituierten 2,2,3,3-Tetramethyl-cyclopropan-1-carbonsäure-benzylestern der Formel (I), dadurch gekennzeichnet, dass man 2,2,3,3-Tetramethyl-cyclopropan-carbonsäure der Formel II

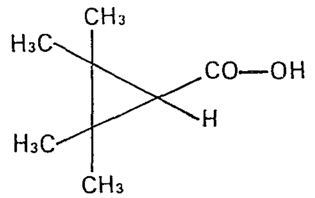

(II)

oder reaktionsfähige Derivate derselben mit Alkoholen der Formel III

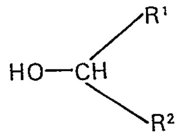

(III)

in welcher

$R^1$ und $R^2$ die oben angegebenen Bedeutungen haben,
oder mit reaktionsfähigen Derivaten derselben, gegebenenfalls in Gegenwart von Säureakzeptoren und/oder Katalysatoren und gegebenenfalls unter Verwendung von Verdünnungsmitteln umsetzt.

3. Schädlingsbekämpfungsmittel, gekennzeichnet durch einen Gehalt an mindestens einem Fluor-substituierten 2,2,3,3-Tetramethyl-cyclopropan-1-carbonsäure-benzylester der Formel (I).

4. Verwendung von Fluor-substituierten 2,2,3,3-Tetramethyl-cyclopropan-1-carbonsäure-benzylestern der Formel (I) zur Bekämpfung von Schädlingen.

5. Verfahren zur Bekämpfung von Schädlingen, dadurch gekennzeichnet, dass man Fluor-substituierte 2,2,3,3-Tetramethyl-cyclopropan-1-carbonsäure-benzylester der Formel (I) auf Schädlinge und/oder ihren Lebensraum einwirken lässt.

6. Verfahren zur Herstellung von Schädlingsbekämpfungsmitteln, dadurch gekennzeichnet, dass man Fluor-substituierte 2,2,3,3-Tetramethyl-cyclopropan-1-carbonsäure-benzylester der Formel (I) mit Streckmitteln und/oder oberflächenaktiven Mitteln vermischt.

**Revendications**

1. Esters benzyliques d'acide 2,2,3,3-tétraméthyl-cyclopropane-1-carboxylique substitués par du fluor, de formule I:

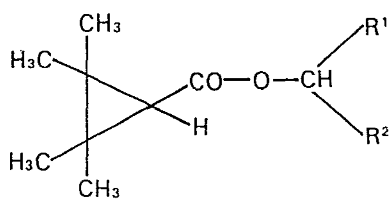

(I)

dans laquelle:

$R^1$ représente l'hydrogène, un reste cyano, alkyle, alcényle ou alcynyle, ces derniers ayant chacun jusqu'à 4 atomes de carbone, et

$R^2$ est un reste phényle substitué par un halogène et/ou par un radical phénoxy éventuellement substitué par un halogène, à condition que le reste $R^2$ contienne au total au moins un substituant fluoro.

2. Procédé de production d'esters benzyliques d'acide 2,2,3,3-tétraméthyl-cyclopropane-1-carboxylique substitués par du fluor, de formule (I), caractérisé en ce qu'on fait réagir l'acide 2,2,3,3-tétraméthyl-cyclopropane-carboxylique de formule II:

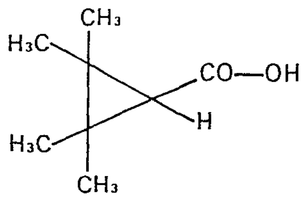

(II)

ou des dérivés réactifs de cet acide avec des alcools de formule II:

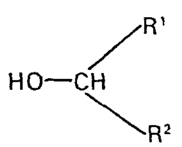

(III)

dans laquelle:

$R^1$ et $R^2$ ont les définitions indiquées ci-dessus, ou avec des dérivés réactifs de ces alcools, le cas échéant en présence d'accepteurs d'acides et/ou de catalyseurs et en utilisant éventuellement des diluants.

3. Composition pesticide, caractérisée par une teneur en au moins un ester benzylique d'acide 2,2,3,3-tétraméthyl-cyclopropane-1-carboxylique substitué par du fluor, de formule (I).

4. Utilisation d'esters benzyliques d'acide 2,2,3,3-tétraméthyl-cyclopropane-1-carboxylique substitués par du fluor de formule (I) dans la lutte contre des parasites.

5. Procédé de lutte contre des parasites, caractérisé en ce qu'on fait agir des esters benzyliques d'acide 2,2,3,3-tétraméthyl-cyclopropane-1-carboxylique substitués par du fluor de formule (I) sur des parasites et/ou sur leur habitat.

6. Procédé de production de compositions pesticides, caractérisé en ce qu'on mélange des esters benzyliques d'acide 2,2,3,3-tétraméthyl-cyclopropane-1-carboxylique substitués par du fluor de formule (I) avec des diluants et/ou des agents tensio-actifs.

**Claims**

1. Fluorine-substituted 2,2,3,3-tetramethyl-cyclopropane-1-carboxylic acid benzyl esters of the formula I

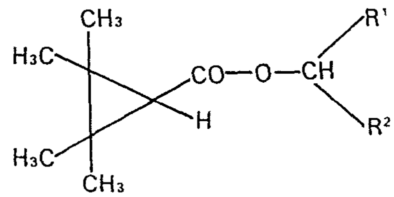

(I)

in which

$R^1$ represents hydrogen, cyano, alkyl, alkenyl or alkinyl, the latter with in each case up to 4 carbon atoms, and

$R^2$ represents a phenyl radical which is substituted by halogen and/or optionally halogen-substituted phenoxy, with the proviso that the radical $R^2$ in total contains at least one fluorine substituent.

2. Process for the preparation of fluorine-substituted 2,2,3,3-tetramethyl-cyclopropane-1-carboxylic acid benzyl esters of the formula (I), characterised in that 2,2,3,3-tetramethyl-cyclopropane-carboxylic acid of the formula II

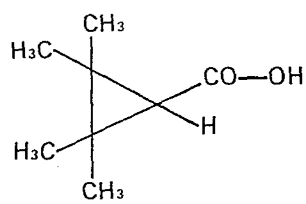

(II)

or a reactive derivative thereof, is reacted with alcohols of the formula III

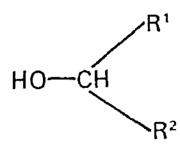

(III)

in which $R^1$ and $R^2$ have the meanings indicated above, or with reactive derivatives thereof, if appropriate in the presence of acid acceptors and/or catalysts and if appropriate using diluents.

3. Agents for combating pests, characterised in that they contain at least one fluorine-substituted 2,2,3,3-tetramethyl-cyclopropane-1-carboxylic acid benzyl ester of the formula (I).

4. Use of fluorine-substituted 2,2,3,3-tetramethyl-cyclopropane-1-carboxylic acid benzyl esters of the formula (I) for combating pests.

5. Process for combating pests, characterised in that fluorine-substituted 2,2,3,3-tetramethyl-cyclopropane-1-carboxylic acid benzyl esters of

the formula (I) are allowed to act on pests and/or their environment.

6. Process for the preparation of agents for combating pests, characterised in that fluorine-substituted 2,2,3,3-tetramethyl-cyclopropane-1-carboxylic acid benzyl esters of the formula (I) are mixed with extenders and/or surface-active agents.